Europäisches Patentamt

European Patent Office

Office européen des brevets

(11) Veröffentlichungsnummer: **0 180 929 B1**

# EUROPÄISCHE PATENTSCHRIFT

(45) Veröffentlichungstag der Patentschrift: **29.05.91**

(51) Int. Cl.5: **B41J 2/435**, B41J 2/00

(21) Anmeldenummer: 85113921.2

(22) Anmeldetag: **31.10.85**

(54) **Elektrooptische Schreibeinrichtung.**

(30) Priorität: **06.11.84 DE 3440406**

(43) Veröffentlichungstag der Anmeldung:
**14.05.86 Patentblatt 86/20**

(45) Bekanntmachung des Hinweises auf die
Patenterteilung:
**29.05.91 Patentblatt 91/22**

(84) Benannte Vertragsstaaten:
**DE FR GB IT NL**

(56) Entgegenhaltungen:
**EP-A- 0 040 575**
**US-A- 4 458 989**

**PATENT ABSTRACTS OF JAPAN, Band 6, Nr.**
**216 (M-168)[1094], 29. Oktober 1982; & JP - A**
**- 57 120 467 (SUWA SEIKOSHA K.K.)**
**27.07.1982**

(73) Patentinhaber: **ALCATEL N.V.**
**Strawinskylaan 537 (World Trade Center)**
**NL-1077 XX Amsterdam(NL)FR GB IT NL**

Patentinhaber: **Standard Elektrik Lorenz Ak-**
**tiengesellschaft**
**Lorenzstrasse 10**
**W-7000 Stuttgart 40(DE)DE**

(72) Erfinder: **Wessel, Gerhard**
**Edisonstrasse 32**
**W-7000 Stuttgart 40(DE)**
Erfinder: **Ebner, Heinz**
**Lerchenweg 4**
**W-7257 Ditzingen 5(DE)**

(74) Vertreter: **Pohl, Heribert, Dipl.-Ing et al**
**Standard Elektrik Lorenz AG Patent- und Li-**
**zenzwesen Postfach 30 09 29**
**W-7000 Stuttgart 30(DE)**

## Beschreibung

Die Erfindung betrifft einen elektrooptischen Schalter einer Schreibeinrichtung zur zeilenweisen Aufzeichnung von Bildpunkten nach dem Oberbegriff des Anspruchs 1.

Aus der US-PS 4 458 989 ist ein derartiger optischer Schalter bekannt, bei dem eine Steuerelektrode zur Ansteuerung · von zwei Bildpunkten herangezogen wird. Damit die beiden Bildpunkte jeweils getrennt dargestellt werden können, ist jedem der beiden Bildpunkte eine Multiplexelektrode zugeordnet, von denen jeweils nur eine ansteuerbar ist. Die beiden Multiplexelektroden dienen allen Steuerelektroden als Gegenelektrode.

Für die Elektroden des bekannten elektrooptischen Schalters sind zwar die prinzipielle Anordnung der Elektroden und die Ansteuereinrichtung, nicht aber die Ausgestaltung der Elektroden angegeben.

Aus der DE-OS 31 13 293 ist die Elektrodenstruktur einer elektrooptischen Schreibeinrichtung bekannt, bei der die Ansteuerung eines Bildpunktes über ein nur diesem Bildpunkt zugehöriges Elektrodenpaar erfolgt.

Die Aufgabe der Erfindung besteht darin, eine Ausgestaltung und Anordnung von Elektroden für einen elektrooptischen Schalter einer Schreibeinrichtung zur zeilenweisen Aufzeichnung von Bildpunkten zu schaffen, bei der eine Steuerelektrode jeweils mit zwei Multiplexelektroden zwei Eletronenpaare bildet und bei der die zwei Multiplexelektroden allen Steuerelektroden als Gegenelektrode dienen.

Die Aufgabe der Erfindung wird durch die Merkmale des Anspruchs 1 gelöst.

Die Unteransprüche zeigen vorteilhafte Ausgestaltungen des Erfindungsgegenstandes auf.

Die Erfindung wird nachstehend anhand von vier Ausführungsbeispielen unter Bezugnahme auf die Zeichnungen näher erläutert. Es zeigen:

Fig. 1 den prinzipiellen Aufbau einer elektrooptischen Schreibeinrichtung;

Fig. 2 ein erstes Ausführungsbeispiel des elektrooptischen Schalters;

Fig. 3 die Elektrodenstruktur nach Fig. 2, im Schnitt;

Fig. 4 ein zweites Ausführungsbeispiel einer Elektrodenstruktur;

Fig. 5 ein drittes Ausführungsbeispiel einer Elektrodenstruktur, und

Fig. 6 ein viertes Ausführungsbeispiel einer Elektrodenstruktur.

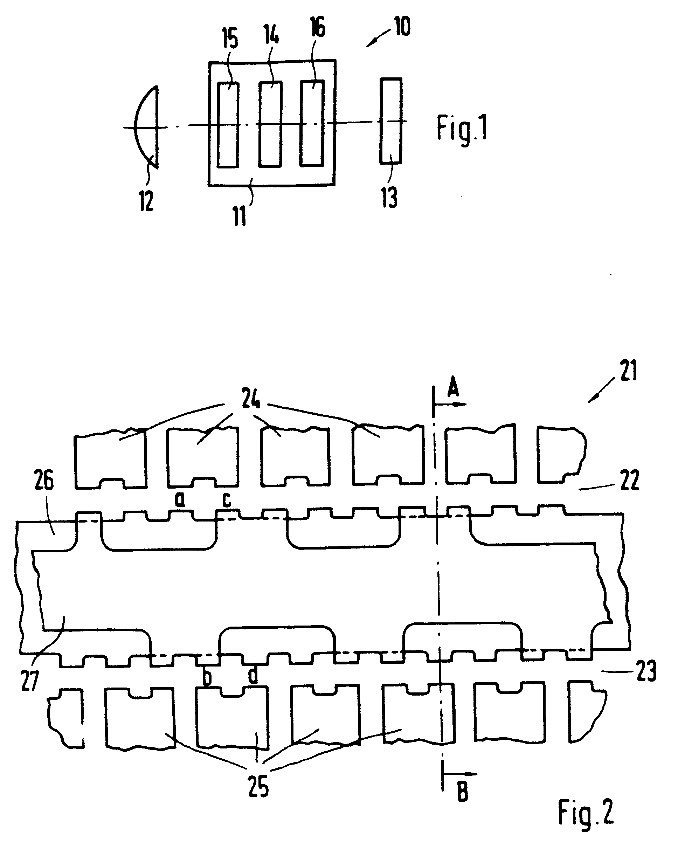

Die Wirkung einer elektrooptischen Schreibeinrichtung 10 wird nun anhand von Fig 1 erläutert. Die relevante Baueinheit stellt der elektrooptische Schalter 11 dar, dessen Funktion auf einer optisch aktiven Schicht 14 beruht. Die Schicht besteht aus einer optischen aktiven Keramik, z .B. einer PLZT-Keramik (Keramik, die aus den chemischen Elementen Blei, Lanthan, Zirkon und Titan besteht) und wird durch anlegen eines elektrischen Feldes vom optischen isotropen in den optisch anisotropen Zustand versetzt. Optisch anisotrop bedeutet, der Brechungsindex ist anisotrop, was auch als optisch doppelbrechend bezeichnet wird. Tritt nun linear polarisiertes Licht durch die doppelbrechende Keramik 14, dreht sich seine Polarisationsebene. Durch die Montage eines Polarisators 15 vor und eines Analysators 16 hinter der doppelbrechenden Keramik kann diese Einheit als elektrooptischer Schalter 11 verwendet werden. Ein Bildpunkt wird dabei angesteuert, indem dem auf der optischen Keramik angebrachten Eletrodenpaar eine Spannung angelegt wird. Das somit entstehende elektrische Feld führt die Keramik vom optisch isotropen in den optisch doppelbrechenden Zustand über. Der eletrooptische Schalter wird für diesen Bildpunkt transparent.

Die Elektrodenstruktur 21 eines erfindungsgemäßen elektrooptischen Schalters ist aus Fig. 2 ersichtlich. Eine Aufzeichnungszeile wird in diesem Fall durch die beiden optischen Zeilen 22 und 23, die auch als Reihen von Bildpunkten 22 und 23 bezeichnet werden, belichtet. Dabei werden vier aufeinanderfolgende Punkte a bis d von den Steuerelektroden 24, 25 und den Multiplexelektroden 26 und 27 angesteuert. Die Elektroden 24 steuern dabei mit den Multiplexelektroden 26 und 27 beispielsweise die Bildpunkte a und c, die Elektroden 25 zusammen mit den Multiplexelektroden 26 und 27, den auf dem Aufzeichnungsträger zwischen den Bildpunkten a und c liegenden Bildpunkt b und den Bildpunkt c nachfolgenden Bildpunkt d. Bildpunkt a wird gesteuert, wenn Spannung zwischen den Steuerelektroden 24 und 26 anliegt, die anderen Bildpunkte werden entsprechend gesteuert.

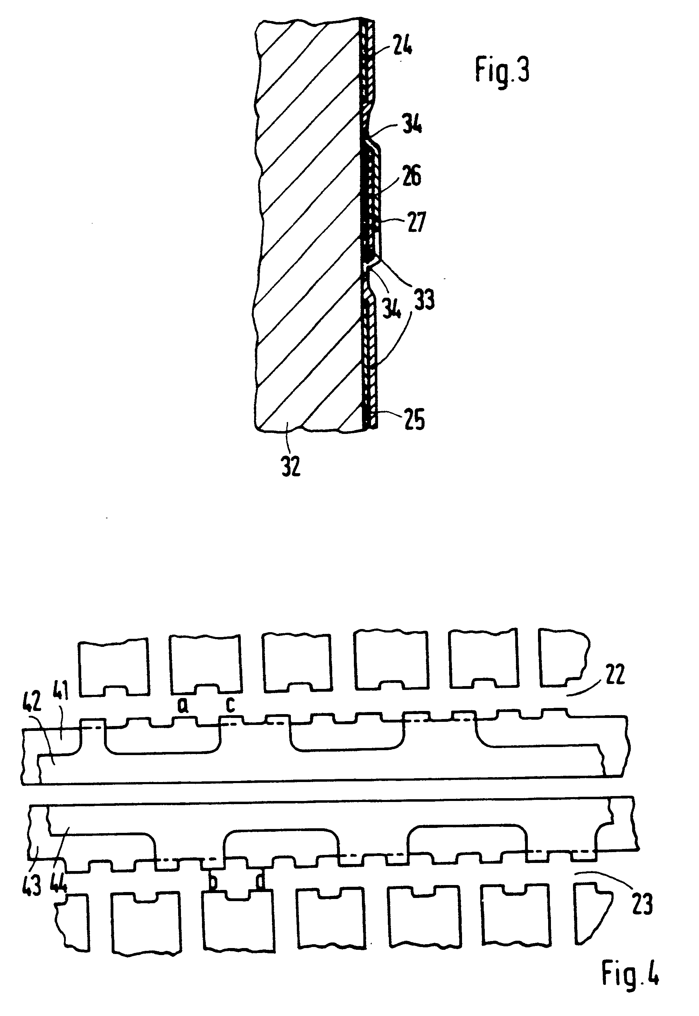

In Fig. 3 ist der Schnitt durch die Elektrodenstruktur einschließlich des optisch doppelbrechenden Substrats 32 dargestellt . Die Steuerelektroden 24 und 25 und die Multiplexelektrode 26 sind direkt auf das Substrat 32 aufgebracht. Als zweite Schicht bedeckt eine Isolierschicht 33 die schon aufgebrachten Elektroden und fast die gesamte Fläche des Substrats. Es bleiben nur kleine Fenster 34 an den Stellen frei, durch die die obere Multiplexelektrode 27 direkten Kontakt zum Substrat 32 hat. Die Isolierschicht 33 hat primär die Aufgabe, die Multiplexelektroden 26 und 27 elektrisch zu trennen. Die Isolierschicht 33 wird in ihrer Dicke so dimensioniert, daß sie an den Bildpunkten z.B. a bis d als $\lambda/4$-Schicht ($\lambda$ = relevante Wellenlänge des Lichtes der Lichtquelle 12) und somit als Antireflexionsschicht wirkt. Bei herkömmlichen Anordnungen mußte diese Schicht zusätzlich aufgebracht werden.

Bei dem aus Fig. 4 ersichtlichen Ausführungsbeispiel sind die beiden Multiplexelektroden in vier Multiplexelektroden 41, 42, 43, 44 aufgeteilt.

Dies bedeutet eine vollkommene elektrische Trennung der beiden optischen Zeilen 22 und 23, die es ermöglicht einen Schlupf beim Transport des Aufzeichnungsträgers 13, oder Gleichlaufschwankungen eines Trommelplotters zu korrigieren. Weiter ermöglicht die elektronische Trennung der beiden optischen Zeilen eine Veränderung der Auflösung von beispielsweise acht Bildpunkten pro mm auf vier Bildpunkte pro mm, was bei einer digitalen Datenübermittlung mit entsprechender Ansteuerung eine kürzere Datenübertragungszeit zur Folge hat. Die Bildpunkte a und b sowie c und d werden in diesem Fall gemeinsam angesteuert und stellen jeweils auch nur einen Bildpunkt dar.

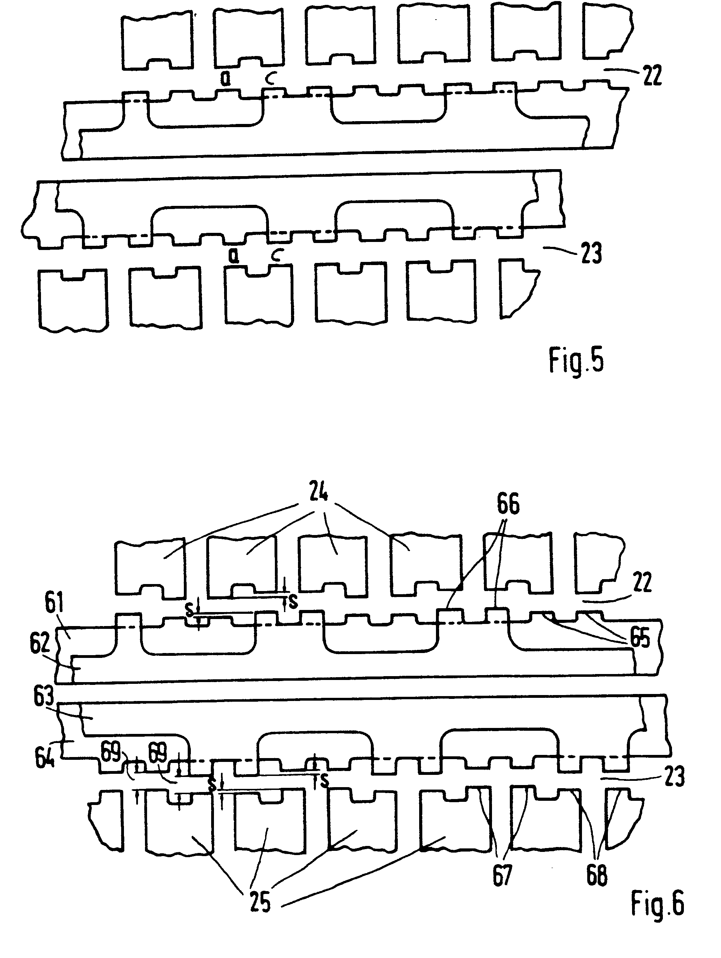

Mit einer Elektrodenstruktur nach Fig. 5 können auch weniger empfindliche Aufzeichnungsträger beschrieben werden, ohne die Belichtungszeit oder die Lichtintensität zu erhöhen. Die Anordnung ist so gewählt, daß die beiden optischen Zeilen gegenüber den in den obengenannten Ausführungsbeispielen um einen Bildpunkt zueinander verschoben sind. Die ursprünglich vier Bildpunkte a, b, c und d bilden hier nur noch zwei Bildpunkte a und c, die aber doppelt vorliegen. Die effektive Belichtungszeit wird hierdurch verdoppelt, ohne die Druckzeit zu erhöhen.

Bei der in Fig. 6 dargestellten Elektrodenstruktur liegen vier Multiplexelektroden 61, 62, 63 und 64 vor. Die den Bildpunkt bestimmenden Elektrodenenden 65 bis 68 werden hier als Elektrodenspitzen bezeichnet. Dabei sind die Elektrodenspitzen 65 der Elektroden 61 und 64 gegenüber den Elektrodenspitzen 66 der Elektroden 62 und 63 um eine Länge s verschoben. Die entsprechenden Elektrodenspitzen 67 und 68 der Steuerelektroden 24 und 25 sind ebenfalls um die Länge s verschoben, was wieder zu einem einheitlichen Elektrodenspitzenabstand 69 führt. Zur Belichtung der optischen Zeile 23 wird die Elektrode 63 nun um die Zeit t früher als die Elektrode 64 angesteuert, mit t = s/v, wobei v die Vorschubgeschwindigkeit des Aufzeichnungsträgers ist. Entsprechend erfolgt die Ansteuerung der optischen Zeile 22. Das hat zur Folge, daß wieder alle Bildpunkte einer Aufzeichnungszeile auf einer Höhe liegen. Der Vorteil dieser Anordnung liegt in der Aufbringung der Elektroden 62 und 63, die auf die Isolierschicht 33 (siehe Fig. 3) und durch das Fenster 34 direkt auf das Substrat 32 aufgebracht werden, ohne die Elektroden 61 und 63 zu berühren. Diese Anordnung läßt an den kritischen Stellen genügend Platz und vereinfacht somit die Herstellung der elektrooptischen Schreibeinrichtung.

**Ansprüche**

1. Elektrooptischer Schalter einer Schreibeinrichtung zur zeilenweisen Aufzeichnung von Bildpunkten,
   - bei dem Elektrodenpaare in einer Reihe befindlich auf einem elektrooptisch aktiven Substrat angeordnet sind,
   - bei dem durch Anlegen einer Spannung an einem Elektrodenpaar ein Bildpunkt abbildbar ist,
   - bei dem ein Elektrodenpaar jeweils aus einem ersten oder einem zweiten Teil einer Steuerelektrode und aus einem Teil einer ersten oder zweiten Multiplexelektrode gebildet wird,
   - bei dem eine erste Art Elektrodenpaare aus den ersten Teilen der Steuerelektroden und Teilen der ersten Multiplexelektrode und eine zweite Art Elektrodenpaare aus den zweiten Teilen der Steuerelektroden und aus Teilen der zweiten Multiplexelektrode gebildet sind,
   - bei der die erste Art Elektrodenpaare und die zweite Art Elektrodenpaare im Wechsel ansteuerbar sind,
   - bei der über die erste Art Elektrodenpaare und die zweite Art Elektrodenpaare jeweils die Hälfte der Bildpunkte einer Bildzeile abbildbar sind,
   **dadurch gekennzeichnet,**
   - daß die zur Bildung von Elektrodenpaaren verwendeten Teile der Steuer- und Multiplexelektroden (24, 25, 26, 27, 41 - 44, 61 - 64) als Elektrodenspitzen (65 - 68) ausgebildet sind,
   - daß die Steuerelektroden (24, 25) direkt benachbart in einer Reihe angeordnet sind,
   - daß die beiden Elektrodenspitzen (67, 68) der Steuerelektroden (24, 25) jeweils auf derselben Seite der Steuerelektroden angeordnet sind,
   - daß die Multiplexelektroden (26, 27, 41 - 44, 61 - 64), in Durchlaßrichtung des Lichtes betrachtet, übereinander angeordnet sind und
   - daß zwischen sich überlappenden Flächen der ersten und zweiten Multiplexelektrode (26, 27, 41 - 44, 61 - 64) eine Isolierschicht angeordnet ist.

2. Elektrooptischer Schalter nach Anspruch 1, dadurch gekennzeichnet,
   - daß eine erste (22) und eine zweite (23) Reihe von Elektrodenpaaren parallel zueinander angeordnet sind,
   - daß sich zwischen zwei benachbarten Elektrodenpaaren nicht ansteuerbare Bereiche von der Ausdehnung eines Bildpunktes (a, b, c, d) befinden,

- daß die beiden Reihen von Elektrodenpaaren (22, 23) in Richtung entlang der Reihen um die Ausdehnung eines Bildpunktes (a, b, c, d) verschoben angeordnet sind,
- daß die Bildpunkte (a, b, c, d) einer Bildzeile abwechselnd über die erste und zweite Reihe von Elektrodenpaaren abgebildet werden.

3. Elektrooptischer Schalter nach Anspruch 1 oder 2, dadurch gekennzeichnet, daß die Elektrodenspitzen (66, 68) der ersten Art von Elektrodenpaaren gegenüber den Elektrodenspitzen (65, 67) der zweiten Art von Elektrodenpaaren um eine Strecke s in der zwischen den Steuerelektroden (24, 25) und Multiplexelektroden (26, 27, 41 - 44, 61 - 64) liegenden Richtung versetzt enden.

4. Elektrooptischer Schalter nach Anspruch 1, dadurch gekennzeichnet, daß die Isolierschicht (33) als Antireflexionsschicht ausgebildet ist.


**Claims**

1. Electrooptical switch of a recording device for recording image information line by line wherein
   - electrode pairs are arranged in a row on an electrooptically active substrate,
   - a recording spot can be imaged by applying a voltage to one of said electrode pairs,
   - each electrode pair is formed from a first or second portion of a control electrode and from a portion of a first or second multiplex electrode,
   - a first kind of electrode pairs is formed from the first portions of the control electrodes and portions of the first multiplex electrode, and a second kind of electrode pairs is formed from the second portions of the control electrodes and portions of the second multiplex electrode,
   - the first kind of electrode pairs and the second kind of electrode pairs are alternately energizable, and
   - one half of the recording spots of each image line can be imaged via the first kind of electrode pairs, and the other half via the second kind of electrode pairs, **characterized in**
   - that the portions of the control and multiplex electrodes (24, 25, 26, 27, 41-44, 61-64) used to form electrode pairs are designed as electrode tips (65-68),
   - that the control electrodes (24, 25) are arranged in a row and directly adjacent to each other,
   - that the two electrode tips (67, 68) of each of the control electrodes (24, 25) are located on the same side of the control electrodes,
   - that the multiplex electrodes (26, 27, 41-44, 61-64), as viewed in the direction of light transmission, are arranged one above the other, and
   - that an insulating film is disposed between overlapping areas of the first and second multiplex electrodes (26, 27, 41-44, 61-64).

2. An electrooptical switch as claimed in claim 1, characterized in
   - that a first row (22) and a second row (23) of electrode pairs are arranged parallel to one another,
   - that between every two adjacent electrode pairs, there is a nonenergizable area having the same extent as a recording spot (a, b, c, d),
   - that the two rows (22, 23) of electrode pairs are staggered in the direction of the rows by the extent of a recording spot (a, b, c, d), and
   - that the recording spots (a, b, c, d) of each image line are alternately imaged via the first and second lines of electrode pairs.

3. An electrooptical switch as claimed in claim 1 or 2, characterized in that the electrode tips (66, 68) of the first kind of electrode pairs are offset from the electrode tips (65, 67) of the second kind of electrode pairs by a distance s in the direction from the control electrodes (24, 25) to the multiplex electrodes (26, 27, 41-44, 61-64).

4. An electrooptical switch as claimed in claim 1, characterized in that the insulating film (33) is an antireflection film.


**Revendications**

1. Rupteur électro-optique de dispositif d'écriture de report ligne par ligne des points d'image,
   - selon lequel des paires d'électrodes sont rangées en ligne sur un substrat électro-optique actif,

- selon lequel un point d'image est illustré après l'application d'une tension à une paire d'électrodes.
- selon lequel chacune d'une paire d'électrodes est formée par la première ou deuxième partie d'un premier ou deuxième électrode multiple,
- selon lequel une première version de paire d'électrodes est formée par le premier élément d'électrode de commande et d'éléments du premier électrode multiple et une deuxième version de paire d'électrodes est formée par le deuxième élément d'électrode de commande et d'éléments du deuxième électrode multiple,
- selon lequel la commande alternante est prévue pour la première version- et la deuxième version- de paire d'électrodes
- selon lequel la première version- et la deuxième version- de paires d'électrodes reproduisent chacune la moitié des points d'une ligne d'image,
  **caractérisé en ce que,**
- les éléments d'électrodes de commande et multiples (24, 25, 26, 27, 41-44, 61-64) sont sous forme de pointes d'électrodes (65 - 68), - les électrodes de commande (24,25) sont directement voisines en une rangée, et,
- les deux pointes d'électrodes (67,68) des électrodes de commande (24,25) sont disposées chacune du même côté de l'électrode de commande,
- les électrodes multiples (26, 27, 41-44, 61-64) sont prévues l'une au dessus de l'autre dans le sens de transmission de lumière, et
- une couche isolante est prévue entre les surfaces chevauchantes de première- et deuxième- électrode multiple (26, 27, 41-44, 61-64).

2. Rupteur électro-optique selon la revendication 1, caractérisé en ce que,
   - une première- (22) et une deuxième- (23) rangée de paires d'électrodes est agencée parallèle l'une à l'autre,
   - des domaines non-commandés d'expansion de point d'image (a,b,c,d) sont situés entre deux paires adjacentes d'électrodes,
   - les deux rangées de paires d'électrodes (22, 23) sont décalées dans le sens de la rangée, de la valeur d'expansion d'un point d'image (a, b, c, d)
   - une formation alternante des points d'image (a, b, c, d) d'une ligne d'image est assurée pour la première et la deuxième rangée de paires d'électrodes.

3. Rupteur électro-optique selon la revendication 1 ou 2, caractérisé en ce que, les pointes d'électrodes (66, 68) de la première version de paires d'électrodes sont décalées par rapport aux pointes d'électrodes (65, 67) de la deuxième version de paires d'électrodes d'une distance (s) entre les électrodes de commande (24,25) et les électrodes multiples (26, 27, 41-44, 61-64).

4. Rupteur électro-optique selon la revendication 1, caractérisé en ce que la couche isolante (33) forme une couche anti-réflexive.

Fig.1

Fig.2

Fig.3

24

34

26

27

33

34

25

32

Fig.4

22

42 41

a c

43 44

b

23

Fig.5

Fig.6